(19) Europäisches Patentamt
European Patent Office
Office européen des brevets

(11) **EP 2 017 648 A1**

(12) **EUROPEAN PATENT APPLICATION**

(43) Date of publication:
**21.01.2009 Bulletin 2009/04**

(51) Int Cl.:
***G01S 13/93*** *(2006.01)*

(21) Application number: **08010539.8**

(22) Date of filing: **10.06.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(30) Priority: **18.07.2007 JP 2007186910**<br><br>(71) Applicant: **Mazda Motor Corporation**<br>**Fuchu-cho**<br>**Aki-gun**<br>**Hiroshima, Hiroshima 730-8670 (JP)** | (72) Inventor: **Ikeda, Kenichi**<br>**Hiroshima 730-8670 (JP)**<br><br>(74) Representative: **Müller-Boré & Partner**<br>**Patentanwälte**<br>**Grafinger Strasse 2**<br>**81671 München (DE)** |

(54) **Obstacle detecting control for a vehicle**

(57)     A control device **11** controls operational devices **21; 22** based on obstacle-detection state detected by the radar device **1** and controls a radar-waves transmitting portion **2** of the obstacle detecting device **1** based on detection of a vehicle speed sensor **12**. The control device **11** is configured to control the radar-waves transmitting portion **2** so that a ratio of transmission term of radar waves transmitted to plural transmission areas is changeable in accordance with detection of the vehicle speed. Accordingly, any obstacle present in any transmission area can be detected promptly and surely.

**FIG. 2**

**Description**

The present invention relates to an obstacle detecting control device, method and computer program product for a vehicle that comprises an obstacle detecting device to detect an obstacle in front of the vehicle.

Conventionally, a radar device, which detects an obstacle by transmitting radar waves forward and then receiving radar waves reflected on the obstacle, is well known. Some type of such radar device can change a detection area, which is disclosed in Japanese Patent Laid-Open Publication No. 7-129900, for example.

An electronic scanning type of radar device has been recently develop. In this radar device the detectable distance is changeable by changing the scanning angle of radar waves transmitted, so that the radar waves can be transmitted to plural transmission areas selectively. That is, the plural transmission areas of radar waves have different values of a distance between its vehicle-presence position and its front tip position. Thus, by changing the scanning angle of radar waves, the radar waves can be transmitted to a near transmission area having a relatively short distance and a far transmission area having a relatively long distance selectively, for example. Herein, due to the difference in the scanning angle, the width of the near transmission area is relatively narrow, while the width of the far transmission area is relatively wide.

Thus, using the radar device capable to send the radar waves to plural transmission areas selectively makes it easy to select the transmission area according to vehicle traveling state or the like. For example, in case the vehicle traveling speed is faster than a specified speed, it is preferably selected that the radar waves be transmitted to a far transmission area, so that any obstacle that is present far away can be properly detected. Meanwhile, in case the vehicle traveling speed is slower than the specified speed, it is preferably selected that the radar waves be transmitted to a near transmission area, so that any obstacle that is present near can be properly detected. Accordingly, any obstacle is detected so promptly and surely by selecting the transmission area of radar waves according to the vehicle traveling speed that an operational device, such as a brake, can be operated properly against the detected obstacle.

However, the above-described selection control may be insufficient. For example, when the vehicle is traveling at the high speed with the far transmission area selected, another obstacle could possibly emerge rapidly in the near transmission area. In this case, since the radar waves are transmitted only to the far transmission area, there is a concern that the detection of any obstacle emerging in the near transmission area would be delayed improperly.

The present invention has been devised in view of the above-described problem, and an object of the present invention is to allow an obstacle detecting control for a vehicle that can provide detection of any obstacle promptly and surely regardless of where it is present.

This object is solved according to the invention by the features of the independent claims. Preferred embodiments of the present invention are subject of the dependent claims.

According to the present invention, there is provided an obstacle detecting control device for a vehicle, comprising:

an obstacle detecting device to detect at least one obstacle substantially in front of the vehicle, the obstacle detecting device comprising an electromagnetic waves transmitting portion to transmit electromagnetic waves substantially forward and an electromagnetic waves receiving portion to receive electromagnetic waves reflected on the obstacle, the electromagnetic waves transmitting portion being configured to transmit the electromagnetic waves to plural transmission areas selectively;

a detecting device to detect a traveling state of the vehicle and/or a condition of a road on which the vehicle travels; and

a control device operative to control an operational device of the vehicle based on obstacle-detection state detected by the obstacle detecting device and control the electromagnetic waves transmitting portion of the obstacle detecting device based on detection of the detecting device,

wherein the control device is configured to control the electromagnetic waves transmitting portion so that a ratio of transmission term of the electromagnetic waves transmitted to the plural transmission areas is changeable in accordance with the detection of the detecting device.

According to an embodiment of the present invention, there is provided an obstacle detecting control device of a vehicle, comprising an obstacle detecting device to detect an obstacle in front of the vehicle, the obstacle detecting device comprising a radar-waves transmitting portion to transmit radar waves forward and a radar-waves receiving portion to receive radar waves reflected on the obstacle, the radar-waves transmitting portion being configured to transmit the radar waves to plural transmission areas selectively, a detecting device to detect a traveling state of the vehicle and/or a condition of a road on which the vehicle travels, and a control device operative to control an operational device of the vehicle based on obstacle-detection state detected by the obstacle detecting device and control the radar-waves transmitting portion of the obstacle detecting device based on detection of the detecting device, wherein the control device is configured to control the radar-waves transmitting portion so that a ratio of transmission term of the radar waves transmitted to the plural transmission areas is changeable in accordance with the detection of the detecting device.

According to the above, the control device controls the electromagnetic waves (radar-waves) transmitting portion of the obstacle detecting device based on detection of the detecting device so that the ratio of transmission term of the electromagnetic waves (radar waves) transmitted to the plural transmission areas is changeable in accordance with the traveling state of the vehicle (vehicle traveling speed, etc.) and/or the condition or status of the road on which the vehicle travels (road width, presence of pedestrian, etc.). For example, in case the plural transmission areas have a different detectable distance from each other and they are comprised of a near transmission area and a far transmission area, when the vehicle traveling speed is faster than a specified (predetermined or predeterminable) speed, the transmission-term ratio of the radar waves transmitted to the far transmission area is changed so as to become larger than that of the radar waves transmitted to the near transmission area. Meanwhile, when the vehicle traveling speed is the specified speed or slower, the transmission-term ratio of the radar waves transmitted to the near transmission area is changed so as to become larger than that of the radar waves transmitted to the far transmission area. Accordingly, the transmission-term ratio of the electromagnetic waves (radar waves) transmitted to the far transmission area that is properly selected according to the vehicle traveling state or the road condition, so that any obstacle that is present in any transmission area can be detected promptly and surely. Herein, the electromagnetic waves (radar waves) are transmitted to any transmittable area, so that any obstacle emerging in any area can be detected. Thus, any necessary action against any obstacle detected can be achieved with the operational device.

According to an embodiment of the present invention, said plural transmission areas respectively have different detectable distances and/or different scanning angles.

According to an embodiment of the present invention, the plural transmission areas have a different detectable distance from each other.

Further, according to another embodiment of the present invention, the plural transmission areas comprise two areas of a near transmission area and a far transmission area, or three areas of a near transmission area, a middle transmission area, and a far transmission area.

According to the above-described embodiments, any obstacle can be detected promptly and surely in case it is present far from or near to the traveling vehicle. Particularly, in case the transmission-term ratio of the electromagnetic waves (radar waves) transmitted to the far transmission area or the middle transmission area is set to be relatively large, even if another obstacle emerges rapidly in the near transmission area, the operational device, such as brake, can be properly operated against the obstacle having emerged.

According to another embodiment of the present invention, said detecting device comprises a traveling-speed detecting device to detect a vehicle traveling speed, and said control device is configured to control the electromagnetic waves transmitting portion so that the transmission-term ratio of the electromagnetic waves transmitted to the plural transmission areas is changeable in accordance with the vehicle traveling speed detected by the traveling-speed detecting device.

According to another embodiment of the present invention, the detecting device comprises a traveling-speed detecting device to detect a vehicle traveling speed, and the control device is configured to control the electromagnetic waves (radar-waves) transmitting portion so that the transmission-term ratio of the electromagnetic waves (radar waves) transmitted to the plural transmission areas is changeable in accordance with the vehicle traveling speed detected by the traveling-speed detecting device.

According to another embodiment of the present invention, the control device is configured to control the electromagnetic waves transmitting portion so that the transmission-term ratio of the electromagnetic waves transmitted to the plural transmission areas is changeable in accordance with the vehicle traveling speed detected by the traveling-speed detecting device in such a manner that the transmission-term ratio of the electromagnetic waves transmitted to a near transmission area becomes large compared with that to a far transmission area when the vehicle traveling speed is relatively slow.

Thereby, the transmission-term ratio of the electromagnetic waves (radar waves) transmitted to the specified transmission area that may be appropriate to the current vehicle traveling speed can be made large, so that any obstacle in that area can be detected promptly and surely. Specifically, it is preferable that the control device be configured to control the electromagnetic waves (radar-waves) transmitting portion so that the transmission-term ratio of the electromagnetic waves (radar waves) transmitted to the plural transmission areas is changeable in accordance with the vehicle traveling speed detected by the traveling-speed detecting device in such a manner that the transmission-term ratio of the electromagnetic waves (radar waves) transmitted to the near transmission area becomes large compared with that to the far transmission area when the vehicle traveling speed is relatively slow.

According to another embodiment of the present invention, said detecting device comprises a road-status detecting device to detect a road status, preferably a width, of the road on which the vehicle travels, and said control device is configured to control the electromagnetic waves transmitting portion so that the transmission-term ratio of the electromagnetic waves transmitted to the plural transmission areas is changeable in accordance with the road status, preferably the road width, detected by the road-status detecting device.

According to another embodiment of the present invention, the control device is configured to control the electromagnetic waves transmitting portion so that the transmission-term ratio of the electromagnetic waves transmitted to the plural transmission areas is changeable in accordance with the road status, preferably the road width, detected by the road-width detecting device in such a manner that the transmission-term ratio of the radar waves transmitted to a near transmission area becomes large compared with that to a far transmission area when the road status indicates that the road width is relatively narrow.

According to another embodiment of the present invention, the detecting device comprises a road-width detecting device to detect a width of the road on which the vehicle travels, and the control device is configured to control the radar-waves transmitting portion so that the transmission-term ratio of the radar waves transmitted to the plural transmission areas is changeable in accordance with the road width detected by the road-width detecting device.

Thereby, the transmission-term ratio of the electromagnetic waves (radar waves) transmitted to the specified transmission area that may be appropriate to the current width of the road on the vehicle travels can be made large, so that any obstacle in that area can be detected promptly and surely. Specifically, it is preferable that the control device be configured to control the electromagnetic waves (radar-waves) transmitting portion so that the transmission-term ratio of the electromagnetic waves (radar waves) transmitted to the plural transmission areas is changeable in accordance with the road width detected by the road-width detecting device in such a manner that the transmission-term ratio of the electromagnetic waves (radar waves) transmitted to the near transmission area becomes large compared with that to the far transmission area when the road width is relatively narrow. Thus, since the possibility of obstacle's rapid emergence in the near area is higher in case the vehicle traveling on the relatively narrow road, such obstacle can be detected promptly and surely with the above-described setting of the transmission-term ratio of the electromagnetic waves (radar waves).

According to another embodiment of the present invention, said detecting device comprises an obstacle detecting device, preferably a pedestrian detecting device, to detect at least an obstacle, preferably a pedestrian, cyclist and/or animal, on or near the road, and said control device is configured to control the electromagnetic waves transmitting portion so that the transmission-term ratio of the electromagnetic waves transmitted to the plural transmission areas is changeable in accordance with the obstacle detected by the obstacle detecting device.

Specifically, it is preferable that the control device is configured to control the electromagnetic waves transmitting portion so that the transmission-term ratio of the electromagnetic waves transmitted to the plural transmission areas is changeable in accordance with the obstacle detected by the obstacle detecting device in such a manner that the transmission-term ratio of the electromagnetic waves transmitted to a specified transmission area that corresponds to a location where the detected obstacle is present is larger than that to other transmission area and/or increased with respect to transmission-term ratio of the electromagnetic waves transmitted to the specified transmission area in a situation where no obstacle is determined.

According to another embodiment of the present invention, the detecting device comprises a pedestrian detecting device to detect a pedestrian on the road, and the control device is configured to control the radar-waves transmitting portion so that the transmission-term ratio of the radar waves transmitted to the plural transmission areas is changeable in accordance with the pedestrian detected by the pedestrian detecting device.

Specifically, it is preferable that the control device be configured to control the electromagnetic waves (radar-waves) transmitting portion so that the transmission-term ratio of the electromagnetic waves (radar waves) transmitted to the plural transmission areas is changeable in accordance with the pedestrian detected by the pedestrian detecting device in such a manner that the transmission-term ratio of the electromagnetic waves (radar waves) transmitted to a specified transmission area that corresponds to a location where the detected pedestrian is present is larger than that to other transmission area. Further, in case it is detected that plural pedestrians are present in the plural areas of the transmission areas, the transmission-term ratios of the electromagnetic waves (preferably the millimeter waves) transmitted to the respective transmission areas may be changed in accordance with the number ratio of present pedestrians. Thereby, since the transmission-term ratio of the electromagnetic waves (radar waves) transmitted to the specified transmission area that may have higher possibility of the detected pedestrian coming in is made properly large, such pedestrian (obstacle) can be detected promptly and surely.

According to another embodiment of the present invention, the operational device of the vehicle controlled by the control device comprises at least one of a brake operating device to operate brake of the vehicle and a seatbelt pre-tensioner to restrain a passenger with application of a specified tension to a seatbelt by winding up the seatbelt. Thereby, any proper action against any obstacle detected can be properly achieved with the brake operating device and/or the seatbelt pre-tensioner.

According to the present invention, there is provided an obstacle detecting control method for a vehicle, in particular for use with a obstacle detecting control device for a vehicle of the invention or a preferred embodiment thereof, comprising the following steps:

detecting at least one obstacle substantially in front of the vehicle including selectively transmitting electromagnetic waves substantially forward to plural transmission areas and receiving electromagnetic waves reflected on the obstacle;

detecting a traveling state of the vehicle and/or a condition of a road on which the vehicle travels; controlling an operational device of the vehicle based on obstacle-detection state detected by the obstacle detecting device; and controlling the selective transmission of the electromagnetic waves to the plural transmission areas based on detection result of the detection of the traveling state of the vehicle and/or the condition of the road on which the vehicle travels, so that a ratio of transmission term of the electromagnetic waves transmitted to the plural transmission areas is changeable in accordance with the detection of the detecting device.

According to an embodiment of the present invention, said plural transmission areas respectively have different detectable distances and/or different scanning angles, wherein said plural transmission areas preferably comprise two areas of a near transmission area and a far transmission area, or three areas of a near transmission area, a middle transmission area, and a far transmission area.

According to another embodiment of the present invention, in said detecting step a vehicle traveling speed is detected, and the electromagnetic waves transmission is controlled such that the transmission-term ratio of the electromagnetic waves transmitted to the plural transmission areas is changeable in accordance with the detected vehicle traveling speed, wherein the electromagnetic waves transmission preferably is controlled such that the transmission-term ratio of the electromagnetic waves transmitted to the plural transmission areas is changeable in accordance with the detected vehicle traveling speed in such a manner that the transmission-term ratio of the electromagnetic waves transmitted to a near transmission area becomes large compared with that to a far transmission area when the vehicle traveling speed is relatively slow.

According to another embodiment of the present invention, said detecting step comprises detecting a road status, preferably a width, of the road on which the vehicle travels, and wherein said electromagnetic waves transmission is controlled such that the transmission-term ratio of the electromagnetic waves transmitted to the plural transmission areas is changeable in accordance with the detected road status, preferably the detected road width, wherein the electromagnetic waves transmission preferably is controlled in such a manner that the transmission-term ratio of the radar waves transmitted to a near transmission area becomes large compared with that to a far transmission area when the road status indicates that the road width is relatively narrow.

According to the present invention, there is further provided a computer program product, particularly tangibly embodied on a computer-readable medium, and/or embodied as a signal and/or data stream, comprising computer readable instructions which, when loaded and executed on a suitable system, perform the steps of an obstacle detecting control method for a vehicle of the invention or a preferred embodiment thereof.

Other features, aspects, and advantages of the present invention will become apparent from the following description which refers to the accompanying drawings.

FIG. 1 is a diagram of a front portion of a vehicle equipped with an obstacle detecting control device according to a first embodiment of the present invention.

FIG. 2 is a block diagram showing the obstacle detecting control device.

FIG. 3 is a plan view showing respective locations of transmission areas.

FIG. 4 is a flowchart showing control processing of an operational device by a control unit.

FIG. 5 is a chart showing a relationship between a transmission-term ratio and a vehicle speed.

FIG. 6 is a flowchart showing a millimeter-wave transmission control processing by the control unit.

FIG. 7 is a block diagram showing a second embodiment, which corresponds to FIG. 2.

FIG. 8 is a chart showing a relationship between a transmission-term ratio and a road width.

FIG. 9 is a block diagram showing a third embodiment, which corresponds to FIG. 2.

Hereinafter, preferred embodiments of the present invention will be described referring to the accompanying drawings. It should be understood that even though embodiments are separately described, single features thereof may be combined to additional embodiments.

EMBODIMENT 1

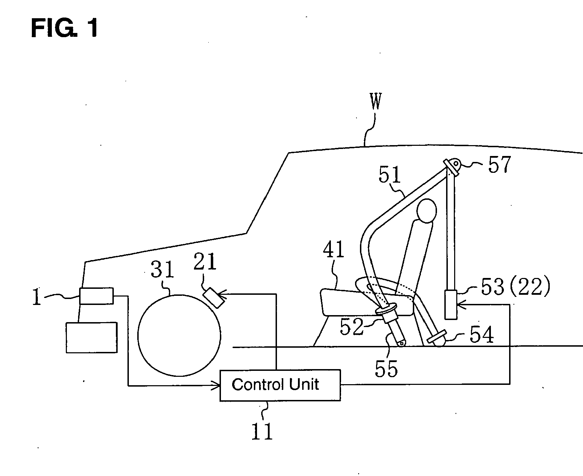

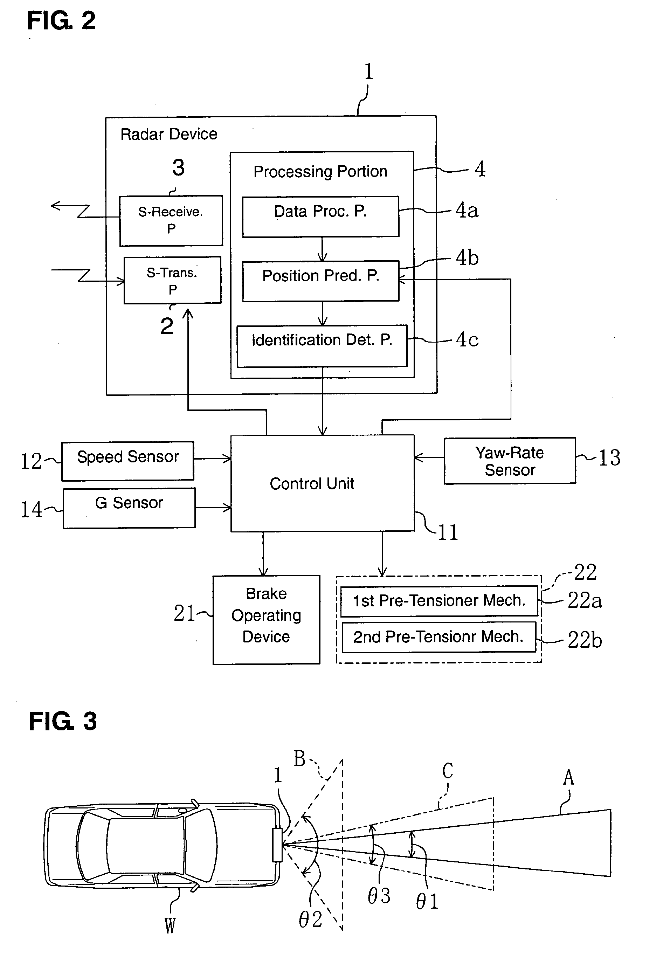

FIG. 1 shows a vehicle W (a traveling vehicle as an automotive vehicle in the present embodiment) that is equipped with an obstacle detecting control device according to a first embodiment of the present invention. A radar device 1, as a preferred obstacle detecting device, operative to detect at least one obstacle that may exist substantially in front of or in a front area around the vehicle W is provided at a front end portion of the vehicle W. The radar device 1 particularly is an electronic scanning type of millimeter-wave radar device, which comprises, as shown in FIG. 2, a signal-transmitting portion 2, as a radar-waves transmitting portion, which transmits millimeter waves (radar waves) forward, scanning a specified-angled area in a substantially horizontal direction, a signal-receiving portion 3, as a radar-waves receiving portion, which receives millimeter waves reflected on any obstacle in front of the vehicle W, and a processing portion 4 that performs the following obstacle-detection processing based on data received by the signal-receiving portion 3.

The signal-transmitting portion 2 is configured to transmit the millimeter waves to plural transmission areas selectively. In the present embodiment, the above-described specified-angled area for scanning (scanning angle) is comprised of two or more areas, particularly of three areas of small (θ1), middle (θ3) and large (θ2). Thus, the millimeter waves can be transmitted to these plurality of (e.g. three) areas selectively (the millimeter waves are transmittable further with the smaller scanning angle). Each area of three transmission areas has a substantially isosceles triangle shape, as shown in FIG. 3, so that the width of each area becomes wider gradually from the front end of the vehicle W. Thus, these areas have respective scanning angles and different detectable distances from each other. Specifically, a transmission area (shown by solid lines) shows a far transmission area A that has a small scanning angle θ1 and a long detectable distance, a transmission area (shown by broken lines) shows a near transmission area B that has a large scanning angle θ2 and a short detectable distance, and a transmission area (shown by two-dotted broken lines) shows a middle transmission area C that has a middle scanning angle θ3 and a middle detectable distance. Herein, the respective detectable distances may be set about 100m, 10 m, and 50m, for example. In other words, the detectable distance is inversely proportional to the specific (predetermined or predeterminable) scanning angle of the signal-transmitting portion 2.

Herein, the respective areas preferably are overlapped partially as shown.

The vehicle W is also equipped with a control unit 11 that performs an operational-device control function for controlling one or more operational devices of the vehicle W based on obstacle-detection information from the processing portion 4 of the radar device 1. Herein, the operational devices include a brake operating device 21 and/or a seatbelt pre-tensioner 22.

The vehicle W preferably comprises, as shown in FIG. 2, a vehicle speed sensor 12 as a traveling-speed detecting device (such as a wheel speed detection device, an engine speed detection device, a detecting device based on a satellite navigation system, etc.) to detect a traveling speed of the vehicle W, a yaw-rate sensor 13 to detect a yaw rate generating at the vehicle W, and/or a G sensor 4 to detect an acceleration and/or deceleration of the vehicle W, particularly to detect hitting of the vehicle W against the obstacle. Detection information of these one or more sensors 12 - 14 preferably are inputted to the control unit 11.

The brake operating device 21 operates one or more brakes of the vehicle W to apply a braking force to one or more selected vehicle wheels 31. The seatbelt pre-tensioner 22 operates to restrain a passenger seated in a seat 41 of the vehicle W with application of a specified (predetermined or predeterminable) tension to a seatbelt 51 by winding up the seatbelt 51.

Hereinafter, a seatbelt device of the vehicle W will be described. The seatbelt device preferably is a three-point type of seatbelt, as shown in FIG. 1, that comprises a retractor portion 53 to wind up the seatbelt 51, a lap anchor portion 54 to which a tip of the seatbelt 51 withdrawn from the retractor 53 is connected, a buckle portion 55 to which a tongue 52 provided at a central or intermediate portion of the seatbelt 51 is detachably connected. The buckle portion 55 is to be fixed to a vehicle body beside the seat 41, and the retractor 53 and the lap anchor portion 54 are to be fixed to the vehicle body on its opposite side of the seat 41. The seatbelt 51 withdrawn from the retractor portion 53 is changed substantially from upward to downward in its withdrawal direction by a slip guide 57 provided at an upper portion of the seat 41, and its tip end is attached to the lap anchor portion 54. The above-described tongue 52 is provided to move over the seatbelt 51 between the slip guide 57 and the lap anchor portion 54. The seatbelt 51 is set by engaging the tongue 52 with the buckle portion 55.

The seatbelt pre-tensioner 22 is provided in or at the retractor portion 53 of the above-described seatbelt device. The seatbelt pre-tensioner 22 of the present embodiment comprises, as shown in FIG. 2, a first pre-tensioner mechanism 22a, in which the seatbelt 51 is wound up (e.g. by an electric motor or the like), and a second pre-tensioner mechanism 22b, in which the seatbelt 51 is wound up particularly with a different mechanism (preferably with a force of gas or fluid generated by an inflator). When the hitting of the vehicle W against the obstacle is predicted (for example, a predicted time of hitting is shorter than a specified (predetermined or predeterminable) standard time) based on the obstacle detecting information supplied from the processing portion 4 of the radar device 1, the above-described control unit 11 operates the first pre-tensioner mechanism 22a to apply a specified (predetermined or predeterminable) tension to the seatbelt 51. Meanwhile, when the hitting of the vehicle W against the obstacle is detected by the G sensor 14, the control unit 11 operates the second pre-tensioner mechanism 22b to apply to the seatbelt 51 a greater tension than the specified tension by the first pre-tensioner mechanism 22a.

The control unit 11 also determines a turning radius of the traveling vehicle W based on detections of the vehicle speed sensor 12 and/or the yaw-rate sensor 13. Specifically, the turning radius R may be obtained from the following equation with the vehicle speed V and the yaw rate φ:

$$R = V/\varphi$$

Herein, there may be further provided a lateral acceleration sensor to detect an lateral acceleration of the vehicle W and/or a steering angle sensor to detect a steering angle of a steering wheel of the vehicle W, and a detection of either one or both of these sensors may be used (e.g. in place of the detection of the yaw-rate sensor 13) to determine the turning radius of the traveling vehicle **W.**

The processing portion **4** of the radar device **1** comprises, as shown in FIG. **2,** a data processing portion **4a,** a position predicting portion **4b,** and/or an identification determining portion **4c.** Herein, the data processing portion **4a** detects the obstacle particularly by conducting a filter processing, FFT processing and/or the like, for the data received by the signal-receiving portion **3.** The position predicting portion **4b** receives the data from the data processing portion **4a** and the vehicle speed and the turning radius of the vehicle **W** from the control unit **11,** and then based on one or more of these data predicts a position of the obstacle detected after a specified (predetermined or predeterminable) time (preferably substantially corresponding to the scanning term of millimeter waves) has passed. The identification determining portion **4c** makes a determination as to whether or not the obstacle that is detected at the above-described specified time passage is identical (or very similar) to the above-described obstacle whose position has been predicted based on the above-described predicted position by the position predicting portion **4b.** Specifically, a determination area surrounding this predicted position with a specified (predetermined or predeterminable) distance from this predicted position is set, and if the obstacle detected at the above-described specified time passage is located within this determination area, it is determined that the obstacle is identical to the obstacle whose position has been predicted. Meanwhile, if the obstacle detected at the above-described specified time passage is located outside the determination area, it is determined that the obstacle is a new obstacle that is different from the one whose position has been predicted. Thus, the identification determining portion **4c** transmits data of the detected obstacle (the distance between the obstacle and the vehicle **W,** the relative direction to the vehicle **W,** the direction and value of the relative speed, etc.) to the control unit **11** as an obstacle detection data.

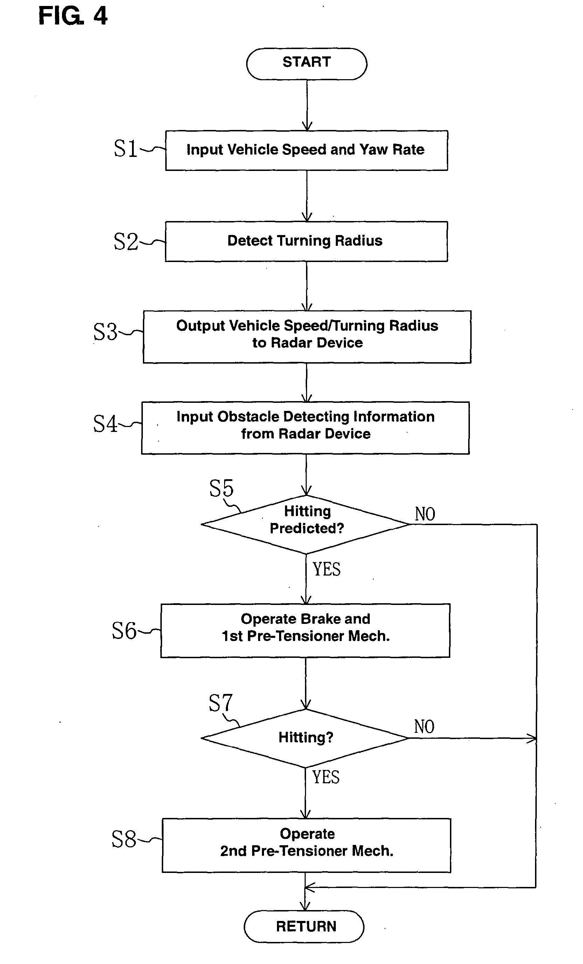

Hereinafter, processing operations of the operational devices (the brake operating device **21** and the seatbelt pre-tensioner **22**) by the control unit **11** will be described referring to a flowchart of FIG. **4.**

First, in step **S1,** the vehicle speed and/or the yaw rate that are respectively detected by the vehicle speed sensor **12** and the yaw-rate sensor **13** are inputted. Then, the turning radius of the traveling vehicle **W** is detected based on the vehicle speed and/or the yaw rate (or any other signal such as signal(s) from the lateral acceleration sensor and/or the steering angle sensor) in step **S2.** Next, in step **S3,** the vehicle speed and turning radius are outputted to the position prediction portion **4b** of the processing portion **4** of the radar device **1.**

In step **S4,** the obstacle detecting information from the identification determining portion **4c** of the processing portion **4** of the radar device **1** is inputted. It is determined based on the inputted obstacle detecting information whether the vehicle **W** hitting the obstacle is predicted or not in step **S5.**

When the determination is NO in the step **S5,** the control sequence returns. When it is YES, the control sequence proceeds to step **S6,** where the brake operating device **21** is operated to apply the brake to the respective wheels **31** and/or the first pre-tensioner mechanism **22a** of the seatbelt pre-tensioner **22** is operated to apply the specified (predetermined or predeterminable) tension to the seatbelt **51.**

Next, in step **S7,** it is determined based on the information from the **G** sensor **14** whether the vehicle **W** hits the obstacle or not. When the determination is NO in the step **S7,** the control sequence returns. When it is YES, the control sequence proceeds to step **S8,** where the second pre-tensioner mechanism **22b** of the seatbelt pre-tensioner **22** is operated to apply the greater tension to the seatbelt **51,** and then the control sequence returns.

The control device **11** controls the signal transmitting portion **2** so as to transmit the millimeter waves to the above-described three transmission areas (the far transmission area **A,** near transmission area **B,** and the middle transmission area **C**) with specified ratios of transmission term of the millimeter waves within a specified time (in particular ratio of transmission term = (specific transmission time with specified scanning angle θ**x**)/(total transmission time per scan)). Further, the control device is configured so that the above-described specified ratios of transmission term is changeable in accordance with the vehicle traveling state. In the present embodiment, the traveling speed of the vehicle **W** (vehicle speed) is determined (preferably detected by the vehicle speed sensor **12**) as the traveling state of the vehicle **W,** and the specified (predetermined or predeterminable) transmission-term ratios are changed by (or in accordance with) the vehicle speed determined (detected). Thus, the control unit **11** performs a radar-waves transmission control function for changing the transmission-term ratio in accordance with the vehicle traveling state, and the vehicle speed sensor **12** (the traveling-speed detecting device) detects the vehicle traveling state.

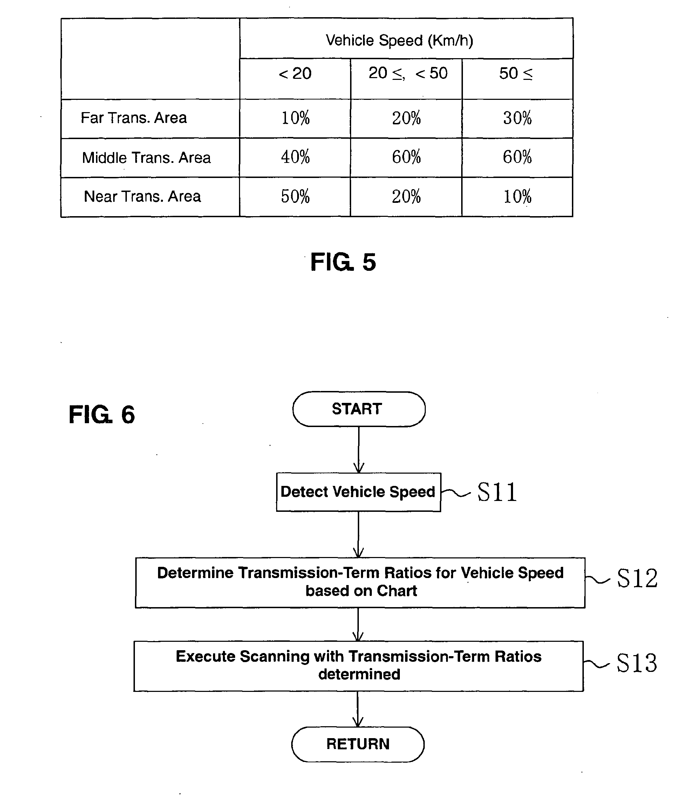

A relationship between the above-described specified transmission-term ratios and the vehicle speed are stored in the control unit **11** as a map or function and/or in a chart or table shown in FIG. **5.** It is set, as shown in this chart, so that as the vehicle speed becomes slower, the transmission-term ratio of the millimeter waves transmitted to the far transmission area **A** becomes smaller, while the transmission-term ratio of the millimeter waves transmitted to the near transmission area **B** becomes larger. In particular in a first (low) vehicle speed area (e.g. for vehicle speeds lower than about 20 km/h), a near transmission area is predominantly scanned (e.g. has a transmission-term ratio of about 50%), while the other areas respectively have a lower transmission-term ratio, wherein the middle transmission area is dominant over the far transmission area (e.g. the middle transmission area has a transmission-term ratio of about 40% and the far transmission area has a transmission-term ratio of about 10%). In a second (intermediate) vehicle speed area (e.g. for vehicle speeds not lower than about 20 km/h, but lower than about 50 km/h), the middle transmission area is predominantly scanned (e.g. has a transmission-term ratio of about 60%), while the other areas respectively have a lower transmission-term ratio (e.g. the near transmission area has a transmission-term ratio of about 20% and the far transmission area has a transmission-term ratio of about 20%). In a third (high) vehicle speed area (e.g. for vehicle speeds not lower than about 50 km/h), the middle transmission area is predominantly scanned (e.g. has a transmission-term ratio of about 60%), while the other areas respectively have a lower transmission-term ratio but preferably with a more dominant ratio of the far transmission area (e.g. the near transmission area has a transmission-term ratio of about 10% and the far transmission area has a transmission-term ratio of about 30%). It should be understood that the relationship between the specified (predetermined or predeterminable) transmission-term ratios and the vehicle speed may be expressed by any specific relationship, e.g. in discrete terms (e.g. a table like the one shown in Fig. 5) or as continuous relationship (such as a mathematical function, a graph or the like).

It may be preferable that the above-describe specified time be set so that at least one time of scanning (i.e. going and coming back) can be conducted to any transmission area. For example, if the specified time is ten times as long as the time per scanning and the vehicle speed is less than about 10 km/h in the example shown in FIG. **5,** the millimeter-waves scanning to the far transmission area **A** can be conducted once (at one time) within the specified time. And, within this specified time, four times of scanning may be possible for the middle transmission area **C,** and five times of scanning may be possible for the near transmission area **B.** Herein, this scanning with plural times for the respective transmission areas **A, B, C** are executed separately, not continuously for each area. However, the continuous scanning for each area may be possible particularly in case the specified time is sufficiently short.

Hereinafter, a millimeter-waves transition control processing operation of the control unit **11** will be described referring to a flowchart of FIG. **6.**

At first, in step **S11,** the vehicle speed sensor **12** detects the vehicle speed. Then, in step **S12,** the transmission-term ratio of the millimeter waves of the respective transmission areas **A, B, C** that corresponds to the vehicle speed detected is determined based on the specific (predetermined or predeterminable) relationship (e.g. chart, function, map and/or table). In the next step S13, the scanning of the millimeter waves with the transmission-term ratio determined are executed.

According to the millimeter-waves transition control processing operation of the control unit **11,** when the vehicle speed is not less than the specified third speed (e.g. about 50 km/h or higher), the millimeter waves are transmitted to the far transmission area **A** and the middle or intermediate transmission area **C** preponderantly. As a result, any obstacle present in these areas **A, C** can be detected promptly and surely. Meanwhile, some millimeter waves (particularly in a transmission-term ratio less than the one of the far transmission area **A** and/or more than the one of the near transmission area **C**) are transmitted to the middle transmission area **B.** accordingly, even if another obstacle has emerged rapidly in the near transmission area **B,** such obstacle can be also detected promptly. Particularly, since the width of the near transmission area **B** is wider than those of the other area **A** and/or the area **C,** this detection of the obstacle emerging in the near transmission area **B** can be achieved properly. Thus, the brake operating device **21** and the like can be operated against that obstacle as well.

Further, as the vehicle speed becomes slower, the transmission-term ratio of the millimeter waves transmitted to the far transmission area **A** becomes smaller, while the transmission-term ratio of the millimeter waves transmitted to the near transmission area **B** becomes larger. The detection of any obstacle that is present near the vehicle **W** can be improved. Then, when the vehicle speed is lower than the first specified speed (e.g. lower than about 20 km/h), although the transmission-term ratio of the millimeter waves transmitted to the near transmission area **B** becomes large, the transmission of some millimeter waves to the far transmission area **A** is maintained (particularly in a transmission-term ratio less than the one of the medium/intermediate transmission area **B** and than of the near transmission area **C**). The detection of the obstacle emerging in the far transmission area **A** can be achieved properly.

Although the traveling speed of the vehicle **W** is detected or determined as a preferred traveling state of the vehicle **W** in the above-described embodiment 1, the turning radius of the vehicle **W,** which can be determined preferably by detection values of the vehicle speed sensor **12** and the yaw-rate sensor **13** for example, may be detected or determined as a preferred vehicle traveling state. Thus, the above-described transmission-term ratio of the millimeter waves may be changed in accordance with the turning radius of the vehicle **W.** In this case, it may be preferable that as the turning radius becomes greater, the transmission-term ratio of the millimeter waves transmitted to the far transmission area **A** become smaller, while the transmission-term ratio of the millimeter waves transmitted to the near transmission area **B** become larger.

EMBODIMENT 2

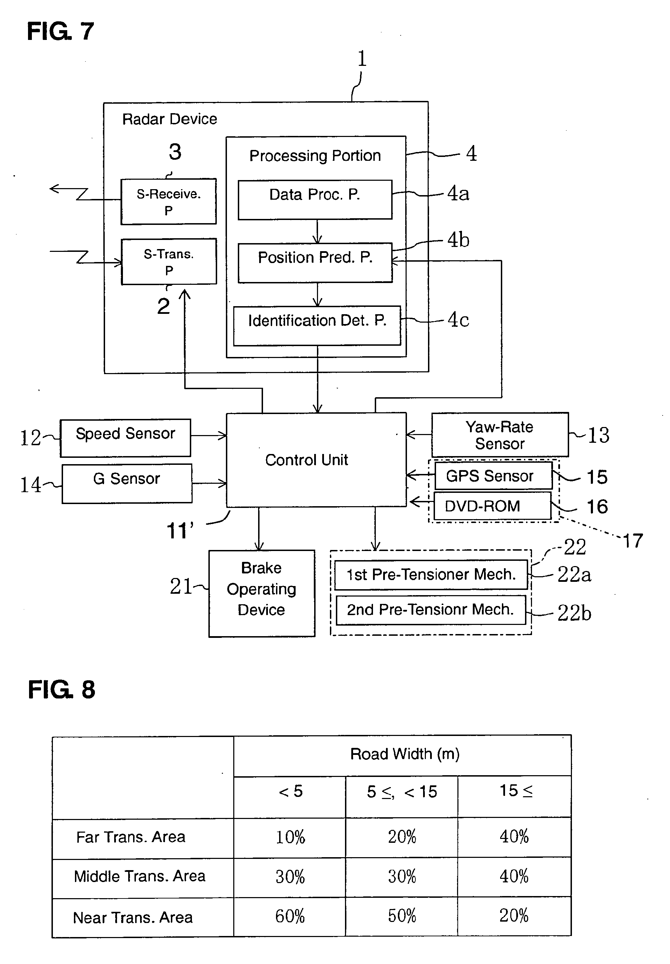

FIG. **7** shows a second embodiment of the present invention, which comprises a GPS sensor **15** to detect a present location of the vehicle **W** and a DVD-ROM **16** to store information of road map (including the road width) in addition or alternatively to (at least part of the features of) the first embodiment 1. The other hardware structures at least partly are similar or the same as those of the first embodiment, whose description is omitted here. Herein, the GPS sensor **15** (as a preferred satellite navigation sensor) and the DVD-ROM **16** (as a preferred database storage unit) are part of a navigation device **17,** a control portion of which performs the navigation function based on the current location information of the vehicle **W** detected by the GPS sensor **15** and the road map information stored in the DVD-ROM **16.**

In the present embodiment, a control unit **11'** receives information from the GPS sensor **15** and the DVD-ROM **16,** and detects a road status (preferably a width) of the road on which the vehicle **W** travels at this moment based on the information. Alternatively or additionally, the road status may comprise the kind of road the vehicle **W** is traveling on (e.g. a high-way, an expressway, a road outside of a city, a road inside a city, a traffic reduced road, a road having a speed limit, a road where construction is taking place and/or the like). And, it changes the transmission-term ratio of the millimeter waves transmitted to the respective transmission areas **A, B, C** in accordance with the road status (preferably the road width) detected or determined. Thus, the GPS sensor **15** and the DVD-ROM sensor **16** form part of a road-status (preferably road-width) detecting device to detect the status (preferably the width) of the road on which the vehicle **W** travels at this moment and/or a detecting device to detect the condition of the road on which the vehicle **W** travels at this moment.

A relationship between the above-described specified transmission-term ratios and the road status are stored in the control unit **11'** as a map or function and/or in a chart (e.g. shown in FIG. **8** with respect to specific road widths), like the first embodiment 1. It is set, as shown in this chart, so that as the road width becomes narrower, the transmission-term ratio of the millimeter waves transmitted to the far transmission area **A** becomes smaller, while the transmission-term ratio of the millimeter waves transmitted to the near transmission area **B** becomes larger.

And, the road width using the GPS sensor **15** and the DVD-ROM sensor **16** detects the road width, the transmission-term ratio of the millimeter waves of the respective transmission areas **A, B, C** that corresponds to the road width detected is determined based on the chart, and the scanning of the millimeter waves with the transmission-term ratio determined are executed.

According to the present embodiment, when the (preferably overall) road width is not less than a third (large) specified width (preferably about 15 m or wider), the millimeter waves are transmitted to the far transmission area **A** and the middle/intermediate transmission area **C** preponderantly. As a result, any obstacle present in these areas **A, C** can be detected promptly and surely. Meanwhile, some millimeter waves (particularly in a transmission-term ratio less than the one of the far transmission area **A** and/or more than the one of the near transmission area **C**) are transmitted to the middle transmission area **B.** Accordingly, even if another obstacle has emerged rapidly in the near transmission area **B,** such obstacle can be also detected promptly.

Further, as the road width becomes narrower (particularly in an intermediate road width range where the road width is less than about 15m, but not less than about 5m), the transmission-term ratio of the millimeter waves transmitted to the far transmission area **A** becomes or is set to be smaller, and/or the transmission-term ratio of the millimeter waves transmitted to the near transmission area **B** becomes or is set to be larger. The detection of any obstacle that is present near the vehicle **W** can be improved. That is, since the possibility of the obstacle's rapid emergence in the near area is higher in case of the narrow or narrower road width, such obstacle can be detected promptly and surely with the above-described setting of the transmission-term ratio of the millimeter waves. Then, when the road width is narrower than a first (low) specified road width (preferably lower than about 5 m), since the transmission-term ratio of the millimeter waves transmitted to the near transmission area **B** becomes or is set to be the largest, the detection of the obstacle emerging in the near transmission area **B** can be achieved properly. Also, since some millimeter waves (particularly in a transmission-term ratio less than the one of the medium/intermediate transmission area **B** and than of the near transmission area **C**) are transmitted to the far transmission area **A,** even if another obstacle emerges in the far transmission area **A,** such obstacle can be detected promptly. In the second embodiment preferably in a first (low) road width area (e.g. for road widths lower than about 5m), a near transmission area is predominantly scanned (e.g. has a transmission-term ratio of about 60%), while the other areas respectively have a lower transmission-term ratio, wherein the middle/intermediate transmission area is dominant over the far transmission area (e.g. the middle transmission area has a transmission-term ratio of about 30% and the far transmission area has a transmission-term ratio of about 10%). In a second (intermediate) road width area (e.g. for road widths not lower than about 5 m, but lower than about 15 m), the scanning in the middle/intermediate transmission area **B** is substantially maintained (e.g. has a transmission-term ratio of about 30%) or only slightly increased or enhanced as compared to the first (low) road width, while the scanning in the near transmission area **C** is decreased (e.g. the near transmission area has a transmission-term ratio of about 50%) and the scanning in the far transmission area **A** is respectively increased (e.g. the far transmission area has a transmission-term ratio of about 20%). In a third (high) road width area (e.g. for road widths not lower than about 15 m), the scanning in the middle/intermediate transmission area **B** is increased with respect to the second road width area (e.g. has a transmission-term ratio of about 40%), the scanning in the far transmission area **C** is increased with respect to the second road width area (e.g. has a transmission-term ratio of about 40%), while the near transmission area **C** respectively has a lower transmission-term ratio (e.g. the near transmission area has a transmission-term ratio of about 20%). It should be understood that the relationship between the specified (predetermined or predeterminable) transmission-term ratios and the road widths may be expressed by any specific relationship, e.g. in discrete terms (e.g. a table like the one shown in Fig. 8) or as continuous relationship (such as a mathematical function, a graph or the like).

Moreover, instead of the specific road widths, the kind of road may be used instead to set the specific transmission-term ratios for the respective transmission areas **A-C,** e.g. a motor highway and/or expressway may correspond to the third road width area, an out-of-city road (such as regional road) and/or normal city road (e.g. having an allowd traveling speed of more than about 40 km/h) may correspond to the second road width area, and/or a rural road, a pedestrian area road, a road with a low speed limit (e.g. not more than about 40 km/h), a road in proximity to a school, a one-way street and/or the like may correspond to the first road width area.

It should be understood that the transmission term ratio for the respective traveling state of the vehicle **W** may be detected based on both the vehicle speed (like in embodiment 1) and the road status (like in embodiment 2), wherein based on the specific traveling state detected or determined, a mathematical average may be formed for the respective transmission-term ratios detected for the respective transmission areas **A-C,** wherein the mathematical average may be weighted.

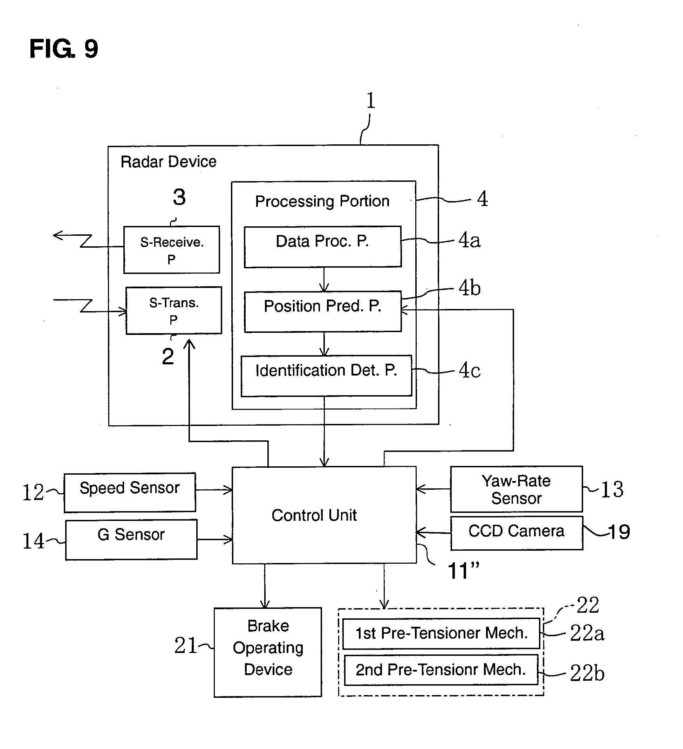

Although the width of the road on which the vehicle **W** travels is detected based on the information from the GPS sensor **15** and the DVD-ROM sensor **16** in the above-described embodiment **2,** it may be detected by a CCD camera **19,** which is described below, (see FIG. **9**) of a third embodiment, or detected by or an infrared sensor, a radar sensor or the like.

EMBODIMENT 3

FIG. **9** shows a third embodiment of the present invention, which comprises a CCD camera **19** to take images in front of the vehicle **W** in addition or alternatively to the first embodiment 1 and/or the second embodiment. The other hardware structures at least partly are similar or the same as those of the first embodiment and/or the second embodiment, whose description is omitted here.

Image data from the CCD camera **19** is/are inputted to the control unit **11",** and the control unit **11"** detects any obstacle (e.g. any pedestrian, animal and/or any person riding a bicycle, scooter or the like) that is present on or close to the road on which the vehicle **W** travels outside the transmission areas **A, B, C** (such as, on a side walk or an edge of the road) and the distance from the vehicle **W** to the obstacle (e.g. pedestrian). Thus, the obstacle (pedestrian), specifically, existence of the obstacle (pedestrian) and the distance to the obstacle (pedestrian) are detected as the road condition of the traveling vehicle **W.** The existence of the obstacle (pedestrian) may be determined based taken images compared with an obstacle's contour (preferably a human's contour), and the distance between the obstacle (pedestrian) and the vehicle **W** may be determined preferably based on a obstacle's (pedestrian's) vertical position in the image taken. Alternatively or additionally, the distance may be detected e.g. based on a radar sensor scanning the respective obstacle. Herein, the control unit **11"** is configured so that the transmission-term ratio of the millimeter waves transmitted to the transmission areas **A, B, C** is changeable in accordance with the obstacle (pedestrian) detected, specifically the distance between the obstacle (pedestrian) and the vehicle **W.** Thus, the CCD camera **19** forms part of a preferred obstacle detecting device (preferably of a preferred pedestrian detecting device) and/or a detecting device to detect the condition of the road on which the vehicle **W** travels at this moment.

For example, in case the detected or determined distance shows that the obstacle (pedestrian) detected is present in the far transmission area **B,** the transmission-term ratio of the millimeter waves transmitted to the near transmission area **B** is changed to be larger than that to the other areas **A, C.** Further, in case it is detected that plural obstacles (e.g. plural pedestrians) are present in the plural areas of the transmission areas **A, B, C,** the transmission-term ratios of the millimeter waves transmitted to the respective transmission areas are changed in accordance with the number ratio of present obstacles (pedestrians).

Thus, according to the present embodiment, since the transmission-term ratio of the millimeter waves transmitted to the specified transmission area that may have higher possibility of the detected obstacle (pedestrian) coming in is made properly high, such obstacle (pedestrian) can be detected promptly and surely. Also, since some millimeter waves are transmitted to the other transmission area, even if another obstacle emerges in that area, such obstacle can be detected promptly.

The above-described embodiments 1, 2 and 3 show that the transmission-term ratio of the millimeter waves transmitted to the transmission areas **A, B, C** is changed in accordance with either one of the traveling speed of the vehicle **W,** the road status (preferably the width of the road) on which the vehicle **W** travels, and the distance between the obstacle (pedestrian) and the vehicle **W**, which are detected. However, the transmission-term ratio may be changed in accordance with combination of plural detections of those. Further, this changing may be executed with the order of priority. For example, when it is detected that the obstacle (e.g. a pedestrian) is present on the road on which the vehicle **W** travels outside the transmission areas **A, B, C,** the transmission-term ratio may be changed in accordance with the distance between the obstacle (e.g. pedestrian) and the vehicle **W**. Meanwhile, when it is detected that no obstacle (pedestrian) is present, the transmission-term ratio may be changed in accordance with the vehicle traveling speed and/or the road width or status.

Also, the plural transmission areas may be comprised of two areas of a near transmission area (with a relatively-short detectable distance) and a far transmission area (with a relatively-long detectable distance), instead of three areas **A, B, C**, or may be comprised of four areas of more.

In this case, it is preferable that the detectable distance of the above-described near transmission area may be set to be longer than that of the area **B**, while the detectable distance of the above-described far transmission area be set to be shorter than that of the area **A.** Also, for example, in case the vehicle traveling speed (and/or the road status, particularly the road width) is higher than the specified value, the transmission-term ratio of the millimeter waves transmitted to the far transmission area is set to be larger than that to the near transmission area. Meanwhile, in case the vehicle traveling speed (or the road width) is the specified value or lower, the transmission-term ratio of the millimeter waves transmitted to the near transmission area is set to be larger than that to the far transmission area.

Further, the plural transmission area may be formed to be located substantially side by side or adjacent to each other in the vehicle width direction, without being substantially overlapped, unlike the above-described areas **A, B, C**. In this case, the areas may have the same detectable distance or different one from each other (e.g., the intermediate/center-located area may have a longer detectable distance than that of both-side located areas). And, the transmission-term ratio of the millimeter waves transmitted to the transmission areas may be changed or set in accordance with a turning radius of the vehicle **W** in such a manner that the transmission-term ratio of the millimeter waves transmitted to a transmission area that is located on a tuning-toward side becomes great compared with that to another transmission area that is on its opposite side when the turning radius of the vehicle W is relatively large.

Also, any other type of radar device than the electronic scanning type of millimeter-waves radar device may be applied as the electromagnetic wave transmission device as long as the electromagnetic waves, particularly radar waves (any type of radar waves), are transmittable to plural transmission areas selectively. For example, an electromagnetic wave transmission device (particularly a radar device) that transmits the electromagnetic waves (particularly the radar waves) with a mechanical scanning.

Further, any operational device other than the brake operating device **21** or the seatbelt pre-tensioner **22,** such as a warning device (e.g. an acoustic signal generator, a visible signal generator, a vibration signal generator (e.g. in the steering wheel) and/or the like) may be applied.

Accordingly, a control device **11** controls operational devices **21; 22** based on obstacle-detection state detected by the radar device **1** and controls a radar-waves transmitting portion **2** of the obstacle detecting device **1** based on detection of a vehicle speed sensor **12.** The control device **11** is configured to control the radar-waves transmitting portion **2** so that a ratio of transmission term of radar waves transmitted to plural transmission areas is changeable in accordance with detection of the vehicle speed and/or the road status (such as the road width). Accordingly, any obstacle present in any transmission area can be detected promptly and surely.

Thus, the present invention should not be limited to the above-described embodiments, and any other modifications and improvements may be applied within the scope of a sprit of the present invention.

## Claims

1. An obstacle detecting control device for a vehicle (**W**), comprising:

    an obstacle detecting device (**1**) to detect at least one obstacle substantially in front of the vehicle (**W**), the obstacle detecting device (**1**) comprising an electromagnetic waves transmitting portion (**2**) to transmit electromagnetic waves substantially forward and an electromagnetic waves receiving portion (**3**) to receive electromagnetic waves reflected on the obstacle, the electromagnetic waves transmitting portion (**2**) being configured to transmit the electromagnetic waves to plural transmission areas (**A, B, C**) selectively;
    a detecting device (**12; 15, 16; 19**) to detect a traveling state of the vehicle (**W**) and/or a condition of a road on which the vehicle (**W**) travels; and
    a control device (**11; 11'; 11"**) operative to control an operational device (**21**; **22**) of the vehicle (**W**) based on obstacle-detection state detected by the obstacle detecting device (**1**) and control the electromagnetic waves transmitting portion (**2**) of the obstacle detecting device (**1**) based on detection of the detecting device (**12; 15, 16; 19**),
    wherein the control device (**11; 11'; 11"**) is configured to control the electromagnetic waves transmitting portion (**2**) so that a ratio of transmission term of the electromagnetic waves transmitted to the plural transmission areas (A, B, C) is changeable in accordance with the detection of the detecting device (**12; 15, 16;** 19).

2. The obstacle detecting control device for a vehicle (**W**) of claim 1, wherein said plural transmission areas (**A, B, C**) respectively have different detectable distances and/or different scanning angles ($\theta 1, \theta 3, \theta 2$).

**3.** The obstacle detecting control device for a vehicle (**W**) of claim 2, wherein said plural transmission areas comprise two areas of a near transmission area and a far transmission area, or three areas of a near transmission area (**B**), a middle transmission area (**C**), and a far transmission area (**A**).

**4.** The obstacle detecting control device fora vehicle (**W**) of any one of the preceding claims, wherein said detecting device comprises a traveling-speed detecting device (**12**) to detect a vehicle traveling speed, and said control device (**11; 11'; 11"**) is configured to control the electromagnetic waves transmitting portion (**2**) so that the transmission-term ratio of the electromagnetic waves transmitted to the plural transmission areas (**A, B, C**) is changeable in accordance with the vehicle traveling speed detected by the traveling-speed detecting device (**12**).

**5.** The obstacle detecting control device for a vehicle (**W**) of claim 4, wherein the control device (**11; 11'; 11"**) is configured to control the electromagnetic waves transmitting portion (**2**) so that the transmission-term ratio of the electromagnetic waves transmitted to the plural transmission areas (**A, B, C**) is changeable in accordance with the vehicle traveling speed detected by the traveling-speed detecting device (**12**) in such a manner that the transmission-term ratio of the electromagnetic waves transmitted to a near transmission area becomes large compared with that to a far transmission area when the vehicle traveling speed is relatively slow.

**6.** The obstacle detecting control device for a vehicle (**W**) of any one of the preceding claims, wherein said detecting device comprises a road-status detecting device (**15, 16**) to detect a road status, preferably a width, of the road on which the vehicle (**W**) travels, and said control device (**11'**) is configured to control the electromagnetic waves transmitting portion (**2**) so that the transmission-term ratio of the electromagnetic waves transmitted to the plural transmission areas (**A, B, C**) is changeable in accordance with the road status, preferably the road width; detected by the road-status detecting device (**15, 16**).

**7.** The obstacle detecting control device for a vehicle (**W**) of claim 6, wherein the control device (**11'**) is configured to control the electromagnetic waves transmitting portion so that the transmission-term ratio of the electromagnetic waves transmitted to the plural transmission areas is changeable in accordance with the road status, preferably the road width, detected by the road-width detecting device (**15, 16**) in such a manner that the transmission-term ratio of the radar waves transmitted to a near transmission area (**A, B, C**) becomes large compared with that to a far transmission area when the road status indicates that the road width is relatively narrow.

**8.** The obstacle detecting control device for a vehicle (**W**) of any one of the preceding claims, wherein said detecting device comprises an obstacle detecting device, preferably a pedestrian detecting device (**19**), to detect at least an obstacle, preferably a pedestrian, cyclist and/or animal, on or near the road, and said control device (**11"**) is configured to control the electromagnetic waves transmitting portion (**2**) so that the transmission-term ratio of the electromagnetic waves transmitted to the plural transmission areas (**A, B, C**) is changeable in accordance with the obstacle detected by the obstacle detecting device (**19**).

**9.** The obstacle detecting control device for a vehicle (**W**) of claim 8, wherein the control device (**11"**) is configured to control the electromagnetic waves transmitting portion so that the transmission-term ratio of the electromagnetic waves transmitted to the plural transmission areas (**A, B, C**) is changeable in accordance with the obstacle detected by the obstacle detecting device (**19**) in such a manner that the transmission-term ratio of the electromagnetic waves transmitted to a specified transmission area that corresponds to a location where the detected obstacle is present is larger than that to other transmission area and/or increased with respect to transmission-term ratio of the electromagnetic waves transmitted to the specified transmission area in a situation where no obstacle is determined.

**10.** The obstacle detecting control device for a vehicle (**W**) of any one of the preceding claims, wherein the operational device of the vehicle (**W**) controlled by said control device (**11; 11'; 11"**) comprises at least one of a brake operating device (**21**) to operate brake of the vehicle (**W**) and is a seatbelt pre-tensioner (**22**) to restrain a passenger with application of a specified tension to a seatbelt (**51**) by winding up the seatbelt (**51**).

**11.** An obstacle detecting control method for a vehicle (**W**), comprising the following steps:

detecting at least one obstacle substantially in front of the vehicle (**W**) including selectively transmitting electromagnetic waves substantially forward to plural transmission areas (**A, B, C**) and receiving electromagnetic waves reflected on the obstacle; detecting a traveling state of the vehicle (**W**) and/or a condition of a road on which the vehicle (**W**) travels; controlling an operational device (**21; 22**) of the vehicle (**W**) based on obstacle-detection state detected by the obstacle detecting device (**1**); and

controlling the selective transmission of the electromagnetic waves to the plural transmission areas (**A, B, C**) based on detection result of the detection of the traveling state of the vehicle (**W**) and/or the condition of the road on which the vehicle (**W**) travels, so that a ratio of transmission term of the electromagnetic waves transmitted to the plural transmission areas (**A, B, C**) is changeable in accordance with the detection of the detecting device (**12; 15, 16; 19**).

**12.** The obstacle detecting control method for a vehicle (**W**) of claim 11, wherein said plural transmission areas (**A, B, C**) respectively have different detectable distances and/or different scanning angles ($\theta$**1**, $\theta$**3**, $\theta$**2**), wherein said plural transmission areas preferably comprise two areas of a near transmission area and a far transmission area, or three areas of a near transmission area (**B**), a middle transmission area (**C**), and a far transmission area (**A**).

**13.** The obstacle detecting control method for a vehicle (**W**) of claim 11 or 12, wherein in said detecting step a vehicle traveling speed is detected, and the electromagnetic waves transmission is controlled such that the transmission-term ratio of the electromagnetic waves transmitted to the plural transmission areas (**A, B, C**) is changeable in accordance with the detected vehicle traveling speed, wherein the electromagnetic waves transmission preferably is controlled such that the transmission-term ratio of the electromagnetic waves transmitted to the plural transmission areas (**A, B, C**) is changeable in accordance with the detected vehicle traveling speed in such a manner that the transmission-term ratio of the electromagnetic waves transmitted to a near transmission area becomes large compared with that to a far transmission area when the vehicle traveling speed is relatively slow.

**14.** The obstacle detecting control method for a vehicle (**W**) of any one of the preceding claims 11 to 13, wherein said detecting step comprises detecting a road status, preferably a width, of the road on which the vehicle (**W**) travels, and wherein said electromagnetic waves transmission is controlled such that the transmission-term ratio of the electromagnetic waves transmitted to the plural transmission areas (**A, B, C**) is changeable in accordance with the detected road status, preferably the detected road width, wherein the electromagnetic waves transmission preferably is controlled in such a manner that the transmission-term ratio of the radar waves transmitted to a near transmission area (**A, B, C**) becomes large compared with that to a far transmission area when the road status indicates that the road width is relatively narrow.

**15.** A computer program product comprising computer readable instructions which, when loaded and executed on a suitable system, perform the steps of an obstacle detecting control method for a vehicle (**W**) of any one of the preceding claims 11 to 14.

**FIG. 1**

# FIG. 2

Radar Device — 1

Processing Portion — 4

S-Receive. P — 3

S-Trans. P — 2

Data Proc. P. — 4a

Position Pred. P. — 4b

Identification Det. P. — 4c

Speed Sensor — 12

G Sensor — 14

Control Unit — 11

Yaw-Rate Sensor — 13

Brake Operating Device — 21

1st Pre-Tensioner Mech. — 22a

2nd Pre-Tensionr Mech. — 22b

22

# FIG. 3

B  C  A

1

W

θ3  θ1

θ2

## FIG. 4

```
                    ( START )
                        │
                        ▼
S1 ──┤  Input Vehicle Speed and Yaw Rate  │
                        │
                        ▼
S2 ──┤      Detect Turning Radius      │
                        │
                        ▼
S3 ──┤  Output Vehicle Speed/Turning Radius  │
     │         to Radar Device             │
                        │
                        ▼
S4 ──┤  Input Obstacle Detecting Information  │
     │         from Radar Device             │
                        │
                        ▼
            ╱◇╲
S5 ──   ╱ Hitting ╲        NO
        ╲ Predicted? ╱ ──────────┐
            ╲◇╱                   │
             │ YES                │
             ▼                    │
S6 ──┤   Operate Brake and    │   │
     │  1st Pre-Tensioner Mech. │  │
             │                    │
             ▼                    │
            ╱◇╲                   │
S7 ──   ╱ Hitting? ╲    NO        │
        ╲         ╱ ──────────────┤
            ╲◇╱                   │
             │ YES                │
             ▼                    │
S8 ──┤      Operate        │      │
     │ 2nd Pre-Tensioner Mech. │  │
             │                    │
             ▼◄───────────────────┘
         ( RETURN )
```

| | Vehicle Speed (Km/h) | | |
|---|---|---|---|
| | < 20 | 20 ≤, < 50 | 50 ≤ |
| Far Trans. Area | 10% | 20% | 30% |
| Middle Trans. Area | 40% | 60% | 60% |
| Near Trans. Area | 50% | 20% | 10% |

## FIG. 5

## FIG. 6

```
          ( START )
              |
              v
   [ Detect Vehicle Speed ]  ~ S11
              |
              v
   [ Determine Transmission-Term Ratios for Vehicle Speed
                based on Chart ]  ~ S12
              |
              v
   [ Execute Scanning with Transmission-Term Ratios
                determined ]  ~ S13
              |
              v
          ( RETURN )
```

## FIG. 7

## FIG. 8

| | Road Width (m) | | |
|---|---|---|---|
| | < 5 | 5 ≤, < 15 | 15 ≤ |
| Far Trans. Area | 10% | 20% | 40% |
| Middle Trans. Area | 30% | 30% | 40% |
| Near Trans. Area | 60% | 50% | 20% |

## FIG. 9

1

**Radar Device**

3

**Processing Portion** — 4

S-Receive. P

Data Proc. P. — 4a

S-Trans. P

Position Pred. P. — 4b

2

Identification Det. P. — 4c

12 — Speed Sensor

14 — G Sensor

**Control Unit**

Yaw-Rate Sensor — 13

CCD Camera — 19

11"

21 — Brake Operating Device

1st Pre-Tensioner Mech. — 22a

2nd Pre-Tensionr Mech. — 22b

22

**European Patent Office**

**EUROPEAN SEARCH REPORT**

Application Number

EP 08 01 0539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/062072 A (BOSCH GMBH ROBERT [DE]; SCHNEIDER MARTIN [DE]) 7 July 2005 (2005-07-07) | 1-9, 11-15 | INV. G01S13/93 |
| Y | * page 4, lines 15-18 * <br> * page 2, lines 2-7 * <br> * page 3, lines 6-11, paragraphs 3,4 * <br> * page 6, lines 10-12 * <br> ----- | 10 | |
| X | US 5 341 344 A (O'BRIEN STEPHEN W [US] ET AL) 23 August 1994 (1994-08-23) | 1-5, 11-13,15 | |
| Y | * column 2, lines 16-24,33,34,61-63; figures 1,2 * <br> * column 3, lines 3-7 * <br> ----- | 6,7,10, 14 | |
| X | EP 1 522 869 A (VALEO SCHALTER & SENSOREN GMBH [DE]) 13 April 2005 (2005-04-13) * paragraphs [0024], [0037], [0043] - [0051], [0055]; figures 3a-d.4 * <br> ----- | 1-5, 11-13,15 | |
| Y | EP 1 302 747 A (FORD GLOBAL TECH INC [US]) 16 April 2003 (2003-04-16) * column 6, lines 54-57 * <br> ----- | 6,7,14 | TECHNICAL FIELDS SEARCHED (IPC) |
| Y | US 6 369 700 B1 (YAMADA YUKINORI [JP]) 9 April 2002 (2002-04-09) * column 1, lines 41-48; figure 1 * <br> ----- | 6 | G01S |
| Y | EP 1 321 776 A (HITACHI LTD [JP]) 25 June 2003 (2003-06-25) * paragraph [0035]; figure 9 * <br> ----- | 6 | |
| Y | US 6 442 484 B1 (MILLER RONALD HUGH [US] ET AL) 27 August 2002 (2002-08-27) * column 3, lines 3-11; figure 1 * <br> * column 4, lines 4-6,13,14,32-35 * <br> * column 7, lines 40-42 * <br> * column 1, lines 35-39,58-64 * <br> ----- | 10 | |

The present search report has been drawn up for all claims

| Place of search | Date of completion of the search | Examiner |
|---|---|---|
| Munich | 19 September 2008 | Metz, Carsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 08 01 0539

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2008

| Patent document cited in search report | | Publication date | Patent family member(s) | | Publication date |
|---|---|---|---|---|---|
| WO 2005062072 | A | 07-07-2005 | CN DE EP JP US | 1894597 A 10360890 A1 1697763 A1 2007514171 T 2008024353 A1 | 10-01-2007 21-07-2005 06-09-2006 31-05-2007 31-01-2008 |
| US 5341344 | A | 23-08-1994 | NONE | | |
| EP 1522869 | A | 13-04-2005 | DE US | 10348226 A1 2005128132 A1 | 04-05-2005 16-06-2005 |
| EP 1302747 | A | 16-04-2003 | US | 2003093220 A1 | 15-05-2003 |
| US 6369700 | B1 | 09-04-2002 | DE JP | 19935123 A1 2000075028 A | 09-03-2000 14-03-2000 |
| EP 1321776 | A | 25-06-2003 | DE DE US | 60205711 D1 60205711 T2 2003112172 A1 | 29-09-2005 18-05-2006 19-06-2003 |
| US 6442484 | B1 | 27-08-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7129900 A